# EUROPÄISCHE PATENTSCHRIFT

(11) **EP 1 101 045 B1**
(45) Veröffentlichungstag und Bekanntmachung des Hinweises auf die Patenterteilung: **05.11.2003**
(21) Anmeldenummer: 00934931.7
(22) Anmeldetag: 26.04.2000
(51) Int. Cl.: F16F 13/30

(54) **STEUERBARES HYDROLAGER, INSBESONDERE FÜR KRAFTFAHRZEUGE**
CONTROLLABLE ANTI-VIBRATION MOUNTING, NOTABLY FOR MOTOR VEHICLES
PALIER HYDRAULIQUE REGLABLE, EN PARTICULIER POUR VEHICULES AUTOMOBILES

(30) Priorität: 30.04.1999 DE 19919876
(43) Veröffentlichungstag der Anmeldung: 23.05.2001
(73) Patentinhaber: ZF Lemförder Metallwaren AG, 49441 Lemförde (DE)
(72) Erfinder: ERSOY, Metin, D-65396 Walluf (DE); MEYERINK, Frank, D-49393 Lohne (DE)
(86) Internationale Anmeldenummer: DE0001294
(87) Internationale Veröffentlichungsnummer: WO00066911

(56) Entgegenhaltungen:
- EP-A- 0 312 719
- DE-A- 19 617 839
- US-A- 5 060 919

## Beschreibung

Die Erfindung betrifft ein steuerbares Hydrolager insbesondere für Kraftfahrzeuge mit einer Arbeitskammer, einer ringförmig um die Arbeitskammer angeordneten Augleichskammer, welche mit einer elektro-rheologischen Flüssigkeit gefüllt und über einen ringspaltförmigen Überströmkanal miteinander verbunden sind, wobei der Überströmkanal zwei sich gegenüberliegende Elektroden zur Erzeugung eines Hochspannungsfeldes im Überströmkanal aufweist.

Ein derartiges gattungsbildendes Motorlager ist beispielsweise aus den Schriften DE 41 22 360 und DE 196 17 839 bekannt. Steuerbare Hydrolager werden benutzt, um unterschiedlichen Betriebsbedingungen angepaßte Dämpfungseigenschaften mit einem einzigen Hydrolager zu realisieren. Üblicherweise wird die Flüssigkeit zwischen der Arbeitskammer und der Ausgleichskammer über den zwischen beiden Kammern liegenden Überströmkanal infolge der auf das Hydrolager wirkenden Schwingungen hin und her bewegt. Die hin- und hergehende Bewegung der Flüssigkeit wirkt sich insbesondere bei niedrigen Frequenzen und entsprechend großen Amplituden schwingungsdämpfend aus. Die Lage und Höhe der maximal möglichen Dämpfung (Resonanzfrequenz) wird durch die Parameter Kanallänge, Kanalquerschnitt und Flüssigkeitsviskosität bestimmt. Da bei einem herkömmlichen Hydrolager sowohl die Kanallänge als auch der Kanalquerschnitt festliegen, läßt sich die Frequenz und die Amplitude der Maximaldämpfüng nur mit Hilfe einer Veränderung der Viskosität der eingesetzten Flüssigkeit verändern. Im Stand der Technik sind diesbezüglich spezielle als elektro-rheologische Flüssigkeiten bezeichnete Stoffe bekannt, bei denen die Beaufschlagung mit einem elektrischen Feld eine Änderung der Viskosität bewirkt. Die Änderung der Viskosität erfolgt hierbei proportional zur Stärke des angelegten elektrischen Feldes, wobei die Reaktion der Flüssigkeit im Milisekundenbereich stattfindet.

In der Praxis hat es sich jedoch gezeigt, daß die für eine Veränderung der Viskosität notwendige Stärke der elektrischen Felder innerhalb des mit Elektroden versehenen Überströmkanals sehr hohe Spannungen erfordert, da für eine Viskositätsänderung einerseits ein schmales Spaltmaß zwischen den sich gegenüberliegenden Elektroden vorzusehen ist, andererseits jedoch ein schmales Spaltmaß einen geringen Flüssigkeitsdurchsatz innerhalb des Überströmkanals nach sich zieht, wodurch wiederum die Dämpfungseigenschaften des betreffenden Hydrolagers infolge der geringen Flüssigkeitsmenge negativ beeinflußt werden. In der in DE 196 17 839 als Lösung offenbarten Bauvariante wird ein relativ langer Überströmkanal mit entsprechend geringem Spaltmaß vorgeschlagen, in dem eine Ringspaltelektrode und eine Gegenelektrode ein entsprechendes Hochspannungsfeld aufbauen können. Ein gravierender Nachteil der offenbarten Lösung besteht jedoch darin, daß durch die Länge des Überströmkanals bedingt eine große Bauhöhe des Hydrolagers in Kauf genommen werden muß.

Aufgabe der vorliegenden Erfindung ist es daher, ein Hydrolager der gattungsgemäßen Art so weiterzuentwickeln, daß im Überströmkanal ein entsprechend geringes Spaltmaß herrscht, gleichzeitig eine ausreichende Länge zur Bereitstellung der für gute Dämpfungseigenschaften notwendigen Flüssigkeitsmenge möglich ist, gleichzeitig soll das erfindungsgemäße Hydrolager in seinen Abmessungen jedoch kompakt und zur Herbeiführung einer hohen Betriebssicherheit einfach im Aufbau und preiswert in der Herstellung sein.

Diese Aufgabe wird in Zusammenschau mit den gattungsbildenden Merkmalen durch die im kennzeichnenden Teil des Hauptanspruches offenbarte technische Lehre gelöst. Der Überströmkanal ist entsprechend der erfindungsgemäßen Offenbarung in seiner Längenausdehnung spiralförmig um die Arbeitskammer verlaufend zwischen dieser und der Ausgleichskammer gestaltet, wobei die Wandung des Kanals aus einer elektrisch isolierenden Trägerschicht besteht, die beidseitig mit Elektroden bildenden, leitenden Deckschichten versehen ist.

Durch die erfindungsgemäße spiralförmige Gestaltung des Überströmkanals läßt sich auf kleinstem Raum ein besonders langer Kanal verwirklichen, wobei gleichzeitig das Spaltmaß zwischen den sich gegenüber liegenden Wänden des Überströmkanals besonders klein gewählt werden kann. Die spiralförmige Aufwicklung der Kanalwandungen erzielt zusätzlich den erfinderischen Zweck, daß die an jeder Seite der Wandung des Kanals aufgebrachte elektrisch leitende Deckschicht bei positiver oder negativer Ladung automatisch eine gegensätzliche Ladung der sich gegenüber liegenden Kanalwandungen erzeugt. Es läßt sich somit durch Anlegen einer Spannung an jeweils eine Deckschicht auf einfachste Weise ein elektrisches Spannungsfeld erzeugen, das zu einer Variation der Viskosität der im Überströmkanal befindlichen Flüssigkeit führen kann.

Weitere spezielle Ausgestaltungen des Gegenstandes der Erfindung ergeben sich zusammen mit der technischen Lehre des Hauptanspruches aus den Merkmalen der Unteransprüche.

Es hat sich insbesondere als zweckmäßig erwiesen, die Trägerschicht und die leitenden Deckschichten als einteiliges, biegsames Laminatband auszubilden. Ein derartiges biegsames Band ist einfach herzustellen und produktionstechnisch problemlos zu handhaben. Eine besonders kostengünstige Gestaltung des erfindungsgemäßen Hydrolagers ergibt sich darüber hinaus dann, wenn das die Wände des Überströmkanals bildende Laminatband an seiner Schmalseite in jeweils einer Isolierplatte aufgenommen ist, wobei in den Isolierplatten jeweils eine der Spiralformen des Überströmkanals entsprechende Nut ausgespart ist, in die die jeweilige obere bzw. untere Laminatband-Schmalseite eingreift. Die beiden Isolierplatten - beispielsweise aus einem Keramikwerkstoff- machen eine weitergehende Isolierung der beiden auf dem Laminatband befindlichen Deckschichten nach dem Einbau überflüssig, darüber hinaus ist das biegsame Laminatband in den in den Isolierplatten ausgenommenen Nuten zuverlässig festgelegt.

Der für die Beaufschlagung mit elektrischer Energie notwendige Anschluß der beidseitig der Trägerschicht angeordneten Deckschichten wird zweckmäßigerweise durch je einen an der Außenseite des Hydrolagers angeordneten Elektroanschluß durchgeführt.

Im Folgenden wird ein Ausführungsbeispiel des Gegenstandes der Erfindung anhand der beigefügten Zeichnungen näher erläutert.

Es zeigen:
- Figur 1:: eine Schnittdarstellung durch ein erfindungsgemäßes steuerbares Hydrolager und
- Figur 2:: einen Horizontalschnitt durch das Hydrolager der Figur 1 im Bereich des spiralförmigen Überströmkanals entlang der Schnittlinie B-B aus Figur 1.

Das in den Figuren dargestellte Ausführungsbeispiel zeigt ein steuerbares Hydrolager, insbesondere für den Einsatz als Motorlager in Kraftfahrzeugen, welches eine Arbeitskammer 1 und eine konzentrisch außen koaxial um die Arbeitskammer 1 liegende Ausgleichskammer 2 aufweist, die mit einer elektro-rheologischen Flüssigkeit gefüllt sind. Der obere Abschluß der Arbeitskammer 1 wird durch eine Gummiwandung 3 gebildet. Zur Außenseite des Hydrolagers ist die Ausgleichskammer 2 durch eine weitere Gummimembran 4 abgeschlossen. Beide Gummiteile 3 und 4 sind einstückig ausgeführt und mit einem oberen; zentral angeordneten Tragelement 5 festhaftend verbunden, welches am Motor oder an einem anderen abzustützenden Teil mit Hilfe der im Tragelement 5 angeordneten Gewindebohrung 6 befestigbar ist. Die Gummimembran 4 ist mit ihrem unteren freien, der Gummiwandung 3 abgewandten Ende an einer Bodenplatte 7 festgelegt, wobei die Bodenplatte 7 gleichzeitig den unteren Abschluß der Arbeitskammer 1 bildet.

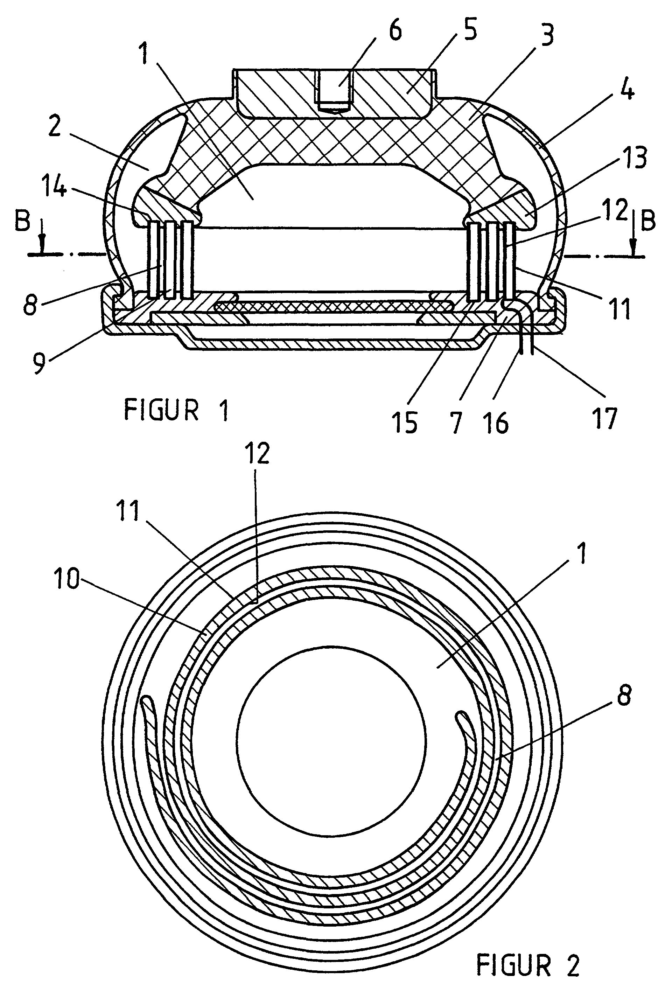

Aus der Zusammenschau der Figuren 1 und 2 ist ersichtlich, daß entsprechend der erfindungsgemäßen Gestaltung in einem Zwischenraum zwischen der oberen Gummimembran 3 und der unteren Bodenplatte 7 ein ringförmiger Überströmkanal 8 angeordnet ist, dessen Wandung durch ein durchgehendes biegsames Laminatband 9 gebildet ist. Das Laminatband 9 besteht aus einer mittig angeordneten Trägerschicht 10 und zwei auf den Breitseiten der Trägerschicht 10 angeordneten Deckschichten 11 und 12. Zur Aufnahme des Laminatbandes 9 und zur Ausformung des spiralförmigen Überströmkanals ist das erfindungsgemäße Lager zwischen Gummiwandung 3 und Laminathand 9 mit einer Isolierplatte 13 versehen, in die entsprechend der Ausgestaltung des spiralförmigen Kanals eine spiralförmige Nut 14 zur Aufnahme der Schmalseite des Laminatbandes eingebracht worden ist. Die Isolierplatte 13 ist ebenso wie die Bodenplatte 7 vorzugsweise aus Keramik hergestellt. In der Bodenplatte 7 ist in Analogie zu der oben beschriebenen Nut 14 in der Isolierplatte 13 eine ebenfalls spiralförmige Nut 15 ausgespart, in die im zusammengebauten Zustand die untere Schmalseite des Laminatbandes 9 eingreift.

Aus der Figur 1 ist ferner ersichtlich, daß die auf der Trägerschicht 10 aufgebrachten beiden Deckschichten 11 und 12 jeweils über einen elektrischen Verbindungsdraht mit jeweils einem elektrischen Kontakt 16 bzw. 17 an der Außenseite des Hydrolagers verbunden sind. Wird an die entsprechenden elektrischen Kontakte 16 und 17 jeweils eine positive beziehungsweise negative Spannung angelegt, so werden die beiden Deckschichten 11 und 12 des Laminatbandes gegensätzlich aufgeladen. Durch die spiralförmige Aufrollung des Laminatbandes 9 ergibt sich automatisch eine negative beziehungsweise positive Aufladung der sich gegenüber liegenden Kanalwandungen. Auf diese Weise wird ein elektrisches Spannungsfeld aufgebaut, wobei eine Veränderung dieses Spannungsfeldes aufgrund der speziellen Eigenschaften der elektro-rheologischen Flüssigkeit zu einer Veränderung der Viskosität dieser Flüssigkeit führt. Die spiralförmige Gestaltung erlaubt es erstmals, einen entsprechend langen Überströmkanal bei einem besonders kleinen Spaltmaß innerhalb des Kanals von 0,5 mm bis 2,0 mm, vorzugsweise 1 mm zu realisieren und gleichzeitig auf der gesamten Kanallänge ein elektrisches Spannungsfeld bereitzustellen. Aus den Figuren ist klar ersichtlich, daß das erfindungsgemäße Hydrolager in seiner Gesamtgröße herkömmlichen bislang eingesetzten Hydrolagern entspricht.

Durch die spezielle Gestaltung und den sehr kleinen Kanalspalt ergibt sich als weiterer Vorteil, daß die für andere Lager der gattungsgemäßen Art notwendigen hohen Spannungen bei diesem erfindungsgemäßen Lager nicht notwendig sind. Gleichzeitig ist jedoch eine ausreichende Flüssigkeitsmenge innerhalb des Überströmkanals 8 vorhanden, um die Dämpfungseigenschaften des Lagers insgesamt nicht negativ zu beeinflussen. Das für die Kanalwandung notwendige biegsame Bandmaterial läßt sich einfach herstellen und problemlos in die entsprechenden Nuten 14 und 15 der Isolierplatte 13 beziehungsweise der Bodenplatte 7 einbringen.

Es gibt im zusammengebauten Zustand des erfindungsgemäßen Lagers keine beweglichen Teile, so daß eine eventuell auftretende Geräuschentwicklung ausgeschlossen ist.

### Bezugszeichenliste:

- 1.: Arbeitskammer
- 2.: Ausgleichskammer
- 3.: Gummiwandung
- 4.: Gummimembran
- 5.: Tragelement
- 6.: Gewindebohrung
- 7.: Bodenplatte
- 8.: Überströmkanal
- 9.: Laminatband
- 10.: Trägerschicht
- 11.: Deckschicht
- 12.: Deckschicht
- 13.: Isolierplatte
- 14.: Nut
- 15.: Nut
- 16.: elektrischer Kontakt
- 17.: elektrischer Kontakt

## Patentansprüche

1. Steuerbares Hydrolager, insbesondere für Kraftfahrzeuge, mit einer Arbeitskammer, einer ringförmig um die Arbeitskammer angeordneten Ausgleichskammer, welche mit einer elektro-rheologischen Flüssigkeit gefüllt sind und über einen ringspaltförmigen Überströmkanal miteinander verbunden sind, wobei der Überströmkanal zwei sich gegenüberliegende Elektroden zur Erzeugung eines Hochspannungsfeldes im Überströmkanal aufweist,
**dadurch gekennzeichnet, daß**
der Überströmkanal (8) in seiner Längenausdehnung spiralförmig um die Arbeitskammer (1) verlaufend zwischen dieser und der Ausgleichskammer (2) gestaltet ist, wobei die Wandung des Überströmkanals (8) aus einer elektrisch isolierenden Trägerschicht (10) besteht, die beidseitig mit Elektroden bildenden, leitenden Deckschichten (11, 12) versehen ist.

2. Steuerbares Hydrolager nach Anspruch 1,
**dadurch gekennzeichnet, daß**
Trägerschicht (10) und leitende Deckschichten (11, 12) ein biegsames Laminatband (9) bilden.

3. Steuerbares Hydrolager nach Anspruch 1 oder 2,
**dadurch gekennzeichnet, daß**
die beidseitig der Trägerschicht (10) angeordneten Deckschichten (11, 12) mit je einem an der Außenseite des Hydrolagers angeordneten Elektroanschluß (16, 17) versehen sind.

4. Steuerbares Hydrolager nach Anspruch 2,
**dadurch gekennzeichnet, daß**
das die Wände des Überströmkanals (8) bildende Laminatband (9) an seinen Schmalseiten in jeweils einer Isolierplatte (7, 13) aufgenommen ist, wobei in den Isolierplatten (7, 13) jeweils eine der Spiralform des Überströmkanals (8) entsprechende Nut (14, 15) ausgespart ist, in die die jeweilige obere bzw. untere Laminatband-Schmalseite eingreift.

5. Steuerbares Hydrolager nach einem der vorangegangenen Ansprüche 1 bis 4,
**dadurch gekennzeichnet, daß**
der Abstand der sich gegenüber liegenden, leitenden Deckschichten (11, 12) des Überströmkanals (8) im Bereich der Kanalspirale zwischen 0,5 mm und 2,0 mm, vorzugsweise 1 mm beträgt.

## Claims

1. Controllable anti-vibration mounting, in particular for motor vehicles, comprising a working chamber, an annular compensating chamber disposed around the working chamber, which chambers are filled with an electro-rheological liquid and connected to one another by an overflow channel in the shape of an annular gap, wherein the overflow channel has two mutually opposing electrodes for generating a high-voltage field in the overflow channel,
**characterized in that**
the overflow channel (8) in its longitudinal extension is designed so as to extend spirally around the working chamber (1) between the latter and the compensating chamber (2), wherein the wall of the overflow channel (8) comprises an electrically insulating carrier layer (10), which is provided on both sides with electrode-forming, conductive cover layers (11, 12).

2. Controllable anti-vibration mounting according to claim 1,
**characterized in that**
carrier layer (10) and conductive cover layers (11, 12) form a flexible laminated strip (9).

3. Controllable anti-vibration mounting according to claim 1 or 2,
**characterized in that**
the cover layers (11, 12) disposed on either side of the carrier layer (10) are each provided with an electrical connection (16, 17) disposed at the outside of the anti-vibration mounting.

4. Controllable anti-vibration mounting according to claim 2,
**characterized in that**
the laminated strip (9) forming the walls of the overflow channel (8) is received at each of its narrow sides in an insulating plate (7, 13), wherein cut out of each of the insulating plates (7, 13) is a groove (14, 15), which corresponds to the spiral shape of the overflow channel (8) and into which the upper and/or lower narrow side of the laminated strip engages.

5. Controllable anti-vibration mounting according to one of the preceding claims 1 to 4,
**characterized in that**
the distance between the mutually opposite, conductive cover layers (11, 12) of the overflow channel (8) in the region of the channel spiral is between 0.5 mm and 2.0 mm, preferably 1 mm.

## Revendications

1. Palier hydraulique pilotable, en particulier pour des véhicules automobiles, avec une chambre de travail, une chambre de compensation disposée en forme d'anneau autour de la chambre de travail, qui sont remplies d'un liquide électro-rhéologique et sont reliées entre elles au moyen d'un canal de passage en forme de fente annulaire, le canal de passage présentant deux électrodes opposées pour la génération d'un champ de haute tension dans le canal de passage,
**caractérisé en ce que**
le canal de passage (8) est conçu dans son extension longitudinale en forme de spirale autour de la chambre de travail (1) disposée entre cette chambre et la chambre de compensation (2), la paroi du canal de passage (8) comprenant une couche support (10) électro-isolante, qui est pourvue des deux côtés de couches de revêtement (11, 12) conductrices et formant des électrodes.

2. Palier hydraulique pilotable selon la revendication 1,
**caractérisé en ce que**
la couche support (10) et les couches de revêtement (11, 12) conductrices forment une bande de stratifié (9) souple.

3. Palier hydraulique pilotable selon la revendication 1 ou 2,
**caractérisé en ce que**
les couches de revêtement (11, 12) disposées des deux côtés de la couche support (10) sont pourvues chacune d'un branchement électrique (16, 17) disposé sur le côté extérieur du palier hydraulique.

4. Palier hydraulique pilotable selon la revendication 2,
**caractérisé en ce que**
la bande de stratifié (9) formant les parois du canal de passage (8) est réceptionnée sur ses côtés étroits dans respectivement une plaque isolante (7, 13), une rainure (14, 15) correspondant à la forme en spirale du canal de passage (8) étant évidée dans chacune des plaques isolantes (7, 13), rainure dans laquelle s'engage le côté étroit respectif supérieur ou inférieur de la bande de stratifié.

5. Palier hydraulique pilotable selon l'une quelconque des revendications 1 à 4,
**caractérisé en ce que**
l'espacement des couches de revêtement (11, 12) conductrices et se faisant face du canal de passage (8) se situe entre 0,5 mm et 2,0 mm, est égal de préférence à 1 mm, dans la zone de la spirale du canal.
